# FASCICULE DE BREVET EUROPEEN

(11) **EP 0 767 079 B1**
(45) Date de publication et mention de la délivrance du brevet: **08.12.1999**
(21) Numéro de dépôt: 96401986.3
(22) Date de dépôt: 19.09.1996
(51) Int. Cl.: B60D 1/54, B60D 1/48

(54) **Poutre de remorquage**
Trägerbalken für Anhänger
Beam for a trailer

(30) Priorité: 06.10.1995 FR 9511774
(43) Date de publication de la demande: 09.04.1997
(73) Titulaire: GIAT INDUSTRIES, 78000 Versailles (FR)
(72) Inventeur: Barreau, Michel, 78690 Les Essarts de Roi (FR); Rembliere, Jean-Michel, 78390 Bois d'Arcy (FR); Timmer, Bernard, 78700 Conflans Ste Honorine (FR)

(56) Documents cités:
- FR-A- 2 707 925
- US-A- 3 545 791
- US-A- 3 666 121
- US-A- 4 269 428

## Description

Le domaine technique de la présente invention est celui des moyens de remorquage d'un véhicule comprenant notamment un crochet de remorquage par l'intermédiaire duquel un véhicule tracteur peut remorquer un véhicule tracté.

Il est bien connu de prévoir pour le remorquage un crochet fixé sur le châssis d'un véhicule à l'avant ou à l'arrière de celui-ci. Le problème est simple lorsque le châssis peut supporter directement la traction appliquée à ce crochet ou lorsqu'on peut fixer le crochet sur une structure rapportée sur l'ossature du véhicule et surtout lorsque la masse du véhicule est peu élevée.

Le problème devient plus complexe lorsque le châssis du véhicule ne peut recevoir un crochet de remorquage central parce que le châssis ne peut offrir aucun point de fixation ou parce que le véhicule est muni d'éléments interdisant la fixation d'un crochet en raison de leur résistance mécanique ou parce que le véhicule comporte, par exemple à l'arrière, une porte amovible sur laquelle il est hors de question de fixer directement un crochet.

On sait d'autre part que l'emplacement disponible pour un crochet de remorquage d'un véhicule doit respecter certains critères liés essentiellement à la garde au sol et l'accessibilité, de façon à permettre un remorquage sur le terrain dans des conditions réelles très difficiles, et donc une grande liberté de mouvement de la barre de remorquage fixée au crochet.

Ainsi, lorsqu'il s'agit d'un véhicule militaire de transport de troupes muni à l'arrière d'une porte rabattable dont les dimensions sont légèrement inférieures à la face arrière de ce véhicule et utilisée comme rampe d'accès du personnel lorsqu'elle est rabattue sur le sol, le problème du remorquage devient très difficile à résoudre. En effet, cette porte interdit tout point de fixation sur le châssis du véhicule et de plus toute utilisation d'un moyen additionnel susceptible d'être rapporté au châssis.

Le brevet FR-A-2 707 925 décrit un dispositif pour adapter un crochet de remorquage directement sur le châssis d'un véhicule. A cette fin on utilise une poutre raccordée directement sur le châssis pour que tous les efforts subis par ce crochet soient transmis à ce châssis. Ce système ne peut pas être monté sur une porte rabattable d'un véhicule.

Le but de la présente invention est de remédier aux inconvénients des dispositifs connus et de proposer une solution au problème posé en fournissant une poutre de remorquage destinée à recevoir un crochet de remorquage pour un véhicule muni d'une porte rabattable.

L'invention a donc pour objet une poutre de remorquage du type divulgué dans FR-A-2 707 925 et ayant les caractéristiques techniques énoncées dans la revendication 1.

Selon un mode préférentiel de réalisation de l'invention, chaque moyen de raccordement est composé d'un moyen de fixation à la porte et d'un moyen de liaison à la caisse du véhicule d'une part, et il comporte une paroi terminale ayant un profil général en U appliquée côté interne sur un palier ayant un profil externe sensiblement identique et solidaire du châssis du véhicule, d'autre part.

Selon un mode de réalisation de l'invention, chaque moyen de liaison est constitué d'un doigt mobile coopérant avec une ouverture pratiquée à travers le palier associé.

Selon un autre mode de réalisation de l'invention, chaque doigt est guidé en translation par deux lumières au travers desquelles coulisse ledit doigt pour permettre son accrochage sur le châssis.

De préférence, les deux doigts des moyens de liaison sont reliés entre eux par un mécanisme de tringlerie pour les commander simultanément en translation.

Selon un autre mode de réalisation de l'invention, les deux blocs flexibles comportent chacun une vis vissée dans la porte et en appui sur un moyen amortisseur comprimable.

Selon un autre mode de réalisation de l'invention, chaque moyen amortisseur est constitué d'un matériau élastique logé entre une coquille interne en appui sur la porte et une coquille externe en appui sur la tête de la vis.

Selon un autre mode de réalisation de l'invention, la coquille interne présente un profil externe tronconique dont la grande base est appliquée sur la porte et la coquille externe présente un profil interne tronconique dont la petite base est appliquée sur la tête de la vis, la coquille externe étant munie au niveau de sa grande base d'un flasque en appui sur une lèvre de matériau élastique.

Selon un exemple de réalisation de l'invention, chaque moyen de raccordement présente la forme d'un bloc usiné comprenant une partie massive supportant le doigt et les blocs flexibles, et une paroi terminale prolongeant la partie massive et coopérant avec le palier associé.

Un tout premier avantage de l'invention réside dans le fait que toutes les contraintes appliquées sur le crochet situé dans une position centrale par rapport au véhicule sont reprises par la poutre et appliquées sur le châssis du véhicule, de manière simple.

Un autre avantage de l'invention réside dans le fait qu'on réalise un blocage en rotation et en translation verticale ainsi qu'un blocage en translation dans le sens transversal, par rapport au véhicule, directement par rapport au châssis de ce véhicule.

Un autre avantage réside dans une fixation flexible de la poutre sur la porte interdisant la transmission des contraintes de la rampe à la porte.

Un autre avantage réside dans le fait que la poutre est facilement séparable du véhicule.

D'autres caractéristiques, détails et avantages de l'invention ressortiront de la description qui va suivre faite en référence aux dessins annexés et dans lesquels :
- la figure 1 est une vue générale de la partie arrière d'un véhicule équipé de la poutre de remorquage selon l'invention,
- la figure 2 représente une vue d'un moyen de raccordement de la poutre de remorquage,
- la figure 3 représente une autre vue du moyen de raccordement de la figure 2,
- la figure 4 est une vue en coupe des moyens de fixation de la poutre de remorquage sur la porte, et
- la figure 5 montre un exemple de mécanisme de manoeuvre des doigts des moyens de raccordement de la poutre,
- la figure 6 représente une vue arrière de véhicule avec la porte rabattue.

La poutre de remorquage selon l'invention est destinée à des véhicules munis d'une porte rabattable placée à l'arrière. Ce type de véhicule est par exemple un véhicule militaire prévu pour le transport de troupe.

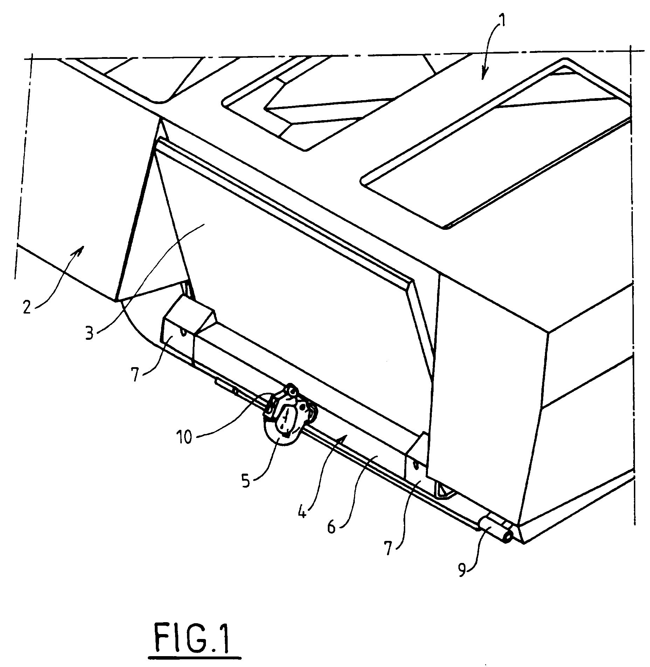

Sur la figure 1, on a représenté un véhicule 1 de ce type, dont la partie arrière 2 est occupée sur pratiquement toute sa surface par une porte rabattable 3 pour l'accès du personnel à l'intérieur de celui-ci. Ce type de véhicule doit être équipé d'un crochet 5 de remorquage en cas de panne par exemple. Selon l'invention, on prévoit une poutre 4 recevant le crochet 5, constituée d'un profilé 6 en forme de U, dont les deux extrémités sont prolongées chacune par un moyen de raccordement 7, assurant à lui seul la fixation de la poutre au châssis du véhicule 1 et à la porte 3. Autrement dit, le profilé 6 n'est pas uniquement solidaire de la porte 3. De façon connue, la porte 3 est articulée par rapport au châssis en agissant sur une barre de torsion 9 pour faciliter son relevage. Bien entendu, le crochet 5 est équipé d'un linguet de sécurité 10 pour empêcher la séparation de la barre de remorquage. Ainsi, le crochet 5 peut être utilisé soit sur un véhicule remorqueur soit sur un véhicule remorqué.

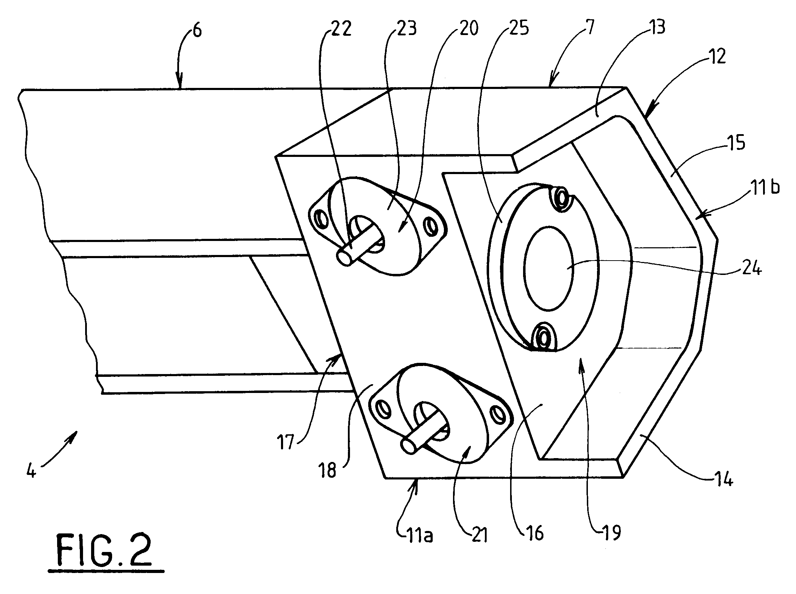

Sur la figure 2, chaque moyen de raccordement 7 est représenté en perspective vue du côté interne, c'est-à-dire le côté appliqué sur la porte rabattable 3. Chaque moyen 7 peut être réalisé soit sous la forme d'un bloc usiné, soit sous la forme d'un assemblage de plaques soudées entre elles délimitant une partie massive 11a prolongée par une partie terminale 11b. Chaque partie 11b comprend une paroi externe 12 délimitée par deux parois latérales 13 et 14 raccordées entre elles par une paroi de base 15 et une paroi interne 16. L'ensemble de ces parois est réuni par deux parois 17 et 18 sécantes. S'il s'agit d'un bloc usiné comme représenté sur la figure 2, chaque moyen 7 comprend la partie massive 11a prolongée par un évidement 19 limité par la partie terminale 11b. S'il s'agit d'un bloc soudé, les différentes parois sont des plaques réunies entre elles par soudage, la partie massive 11a se présentant sous la forme d'un bloc parallélépipèdique délimité par les parois 13, 14, 15, 16, 17 et 18. Sur la paroi 18, on fixe deux éléments de liaison ou blocs flexibles 20 et 21 comprenant classiquement une vis 22 et une embase 23 de fixation à l'élément de raccordement 7 associé. La partie massive 11a est percée d'un canal de réception 24 d'un moyen de liaison à la caisse comme il sera expliqué ci-après. Une bague de guidage 25 peut être appliquée au niveau de l'extrémité externe du canal.

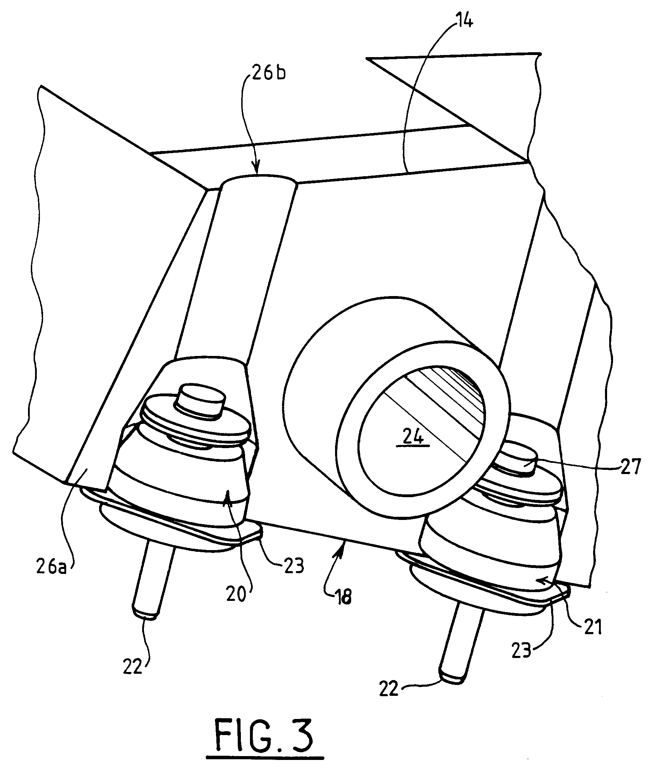

Sur la figure 3, qui est une vue en coupe pratiquée au niveau des vis 22, on a représenté en perspective l'incorporation des blocs flexibles 20 et 21 qui sont logés dans un évidement 26a pratiqué dans la partie massive 11a. Pour actionner la tête 27 de chaque vis 22, un conduit usiné 26b est prévu dans le prolongement de chacune d'elles et débouchant au niveau de la face latérale 14.

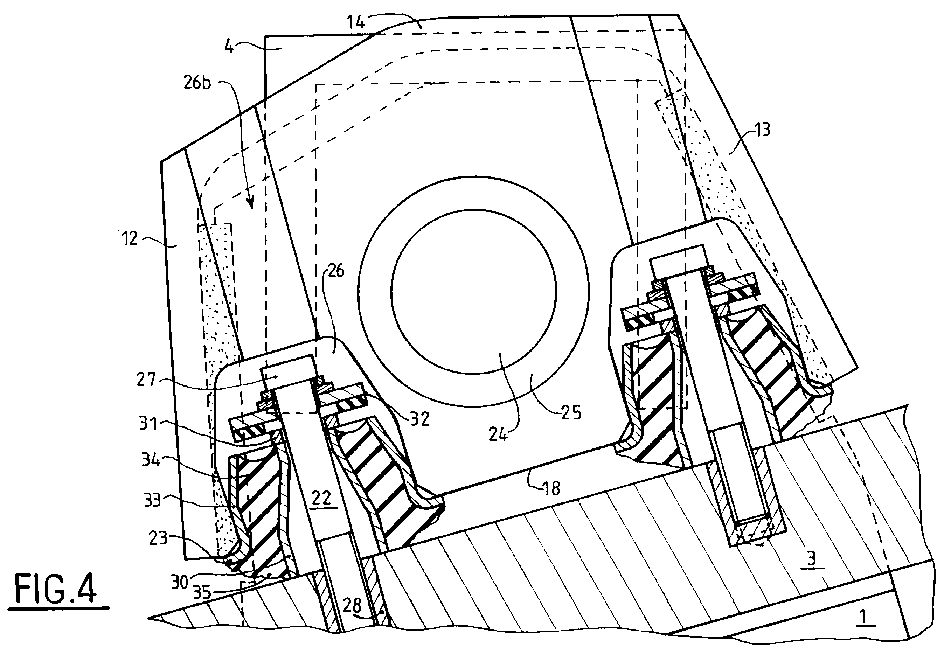

La coupe pratiquée au niveau des moyens de liaison, telle que représentée sur la figure 4, montre la fixation de la poutre 4 sur la porte 3. Celle-ci est réalisée à l'aide des vis 22 fixées directement dans la porte 3 ou bien par l'intermédiaire d'un godet 28 logé dans l'épaisseur de cette porte, en prenant appui sur une coquille interne 30 directement appliquée sur la porte. La tête 27 de la vis 22 et la coquille 30 sont séparées par un certain nombre de rondelles métalliques 31 et élastiques 32 de façon à compenser les tolérances mécaniques. Le système de liaison flexible est délimité par une coquille externe 33, un matériau élastique 34 et la coquille interne 30. La coquille externe 33 est prolongée par l'embase 23 fixée sur la paroi 18 du moyen de raccordement 7. Le matériau élastique 34 est prolongé par une lèvre 35 s'appliquant totalement ou partiellement sur l'embase 23. Cette disposition permet d'isoler totalement la poutre 4 de la porte 3. Sur cette figure 4, on voit que la paroi 14 se présente sous la forme d'un V évasé raccordée aux parois 12 et 13 et la partie évidée 19 est alors délimitée par quatre faces.

La coquille interne 30 présente un profil externe sensiblement tronconique, dont la grande base est appliquée sur la porte 3. De même, la coquille externe 33 présente un profil interne tronconique, dont la petite base est appliquée sur la tête 27 de la vis 22. Ainsi, le matériau élastique 34 disposé entre ces deux profils est comprimé et assure une liaison élastique entre la poutre 4 et la porte 3. Ainsi, les vibrations et les déformations de la poutre 4, notamment au niveau de sa partie médiane où est positionné le crochet 5, ne sont pas transmises à la porte 3.

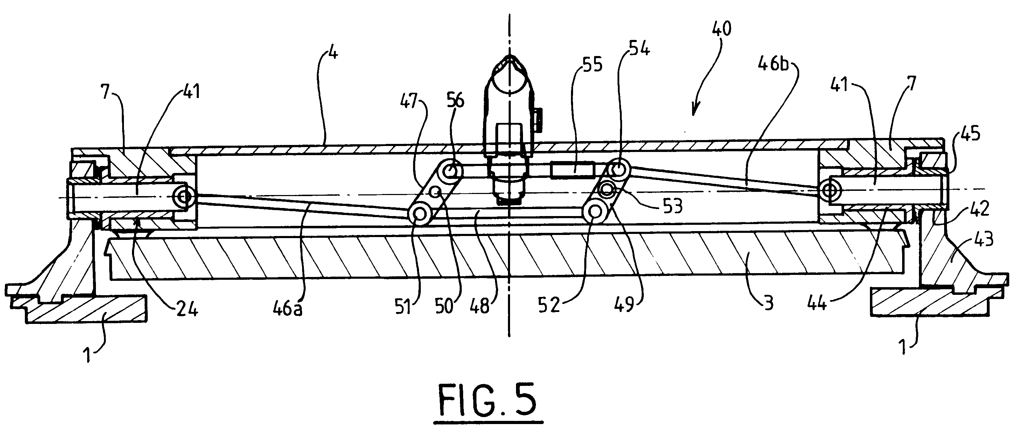

La vue représentée sur la figure 5 montre un moyen de liaison 40 reliant la poutre 4 à la caisse du véhicule 1. Le moyen de liaison 40 est constitué d'un doigt 41 intégré au niveau de chaque moyen de raccordement 7 et coulissant de manière longitudinale par rapport à la poutre 4 pour s'engager dans une ouverture 42 pratiquée dans un prolongement 43 du châssis du véhicule 1. Les doigts se présentent sous la forme de cylindres pleins dont l'extrémité en saillie peut être tronconique pour faciliter leur introduction dans l'ouverture 42. Chaque doigt coulisse dans l'évidement 24 pratiqué dans la partie massive 11a. L'évidement 24 et l'ouverture 42 peuvent être munis chacun des joints respectifs 44 et 45 afin d'éviter un frottement direct entre le doigt et son logement. Les deux doigts sont reliés à un système à parallélogramme assurant leur introduction et leur extraction des ouvertures respectives 42. Ce système comprend un bras 46a ou 46b reliant chaque doigt 41 au parallélogramme délimité par les leviers 47, 48 et 49. Le levier 47 est articulé autour d'un axe 50 fixe situé par exemple en son milieu. Une extrémité reçoit au niveau d'un même axe d'articulation 51 les extrémités du bras 46a et du levier 48. Le levier 48 est relié par son autre extrémité à une extrémité du levier 49 par un axe d'articulation 52. Le levier 49 est articulé autour d'un axe fixe 53 au voisinage de sa partie médiane et reçoit à son autre extrémité le bras 46b par l'intermédiaire d'un axe d'articulation 54. Ce système est manoeuvré par une manette 55 articulée autour d'un axe d'articulation 56 à l'autre extrémité du levier 47. Ainsi, lorsqu'on manoeuvre la manette 55 le parallélogramme se déforme, c'est-à-dire que les leviers 47 et 49 tournent autour des axes respectifs 50 et 53 entraînant dans un sens le retrait des doigts 41 et dans l'autre sens leur engagement dans les ouvertures 42. Bien entendu, les axes 50 et 53 sont fixés à la poutre 4 par des communs non représentés.

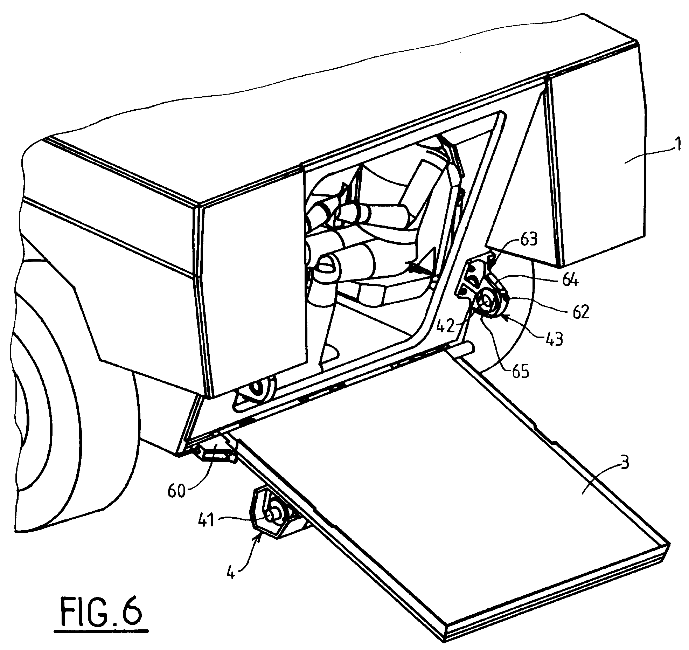

La figure 6 représente une vue arrière du véhicule 1 sur laquelle la porte 3 est rabattue. Bien entendu, la porte 3 est articulée par rapport au véhicule par une charnière 60 et on voit d'un côté l'extrémité apparente de la poutre 4 dont un doigt 41 est en saillie et de l'autre le prolongement 43 du châssis. Ce prolongement se présente ici sous la forme d'un palier 62 fixé au véhicule par exemple par des vis 63, complémentaire à la forme de la partie terminale 116 de la poutre. La palier 62 peut être muni de cales 64 et 65, métalliques et/ou élastiques pour absorber les différents jeux entre le châssis et la poutre.

Ainsi, lorsque chaque doigt 41 est engagé dans l'ouverture 42 correspondante, c'est-à-dire lorsque la porte 3 est en position verrouillée, les contraintes longitudinales et verticales reçues par le crochet 5 sont transmises à la poutre 4, puis aux deux paliers 62 du châssis avec un minimum de contraintes sur la porte 3 elle-même. Les accélérations horizontales arrière, transversales et verticales sont reprises par les paliers 62 du châssis. En position déverrouillée, c'est-à-dire lorsque les doigts 41 ne sont pas engagés dans les paliers 44, la poutre 4 est maintenue par les blocs flexibles 20 et 21 qui reprennent les accélérations horizontales avant.

## Revendications

1. Poutre de remorquage (4) destinée à être appliquée sur la porte rabattable (3) d'un véhicule (1), et munie d'un crochet (5), la poutre étant constituée d'un profilé (6) en forme de U comportant à chacune de ses extrémités un moyen de raccordement (7) à la caisse du véhicule (1), caractérisée en ce que chaque moyen de raccordement (7) est également relié à la porte rabattable (3) et est composé d'un moyen de fixation (20, 21) à la poutre (4) et d'un moyen de liaison (41) à la caisse du véhicule, le moyen de fixation étant constitué de deux blocs flexibles en appui sur un moyen amortisseur (34) comprimable, ledit moyen amortisseur étant constitué d'un matériau élastique en appui sur la porte et sur le moyen de fixation.

2. Poutre de remorquage selon la revendication 1, caractérisée en ce que chaque moyen de raccordement (7) comporte une partie terminale (11b) ayant un profil général en U appliquée côté interne sur un palier (62) ayant un profil externe sensiblement identique et solidaire du châssis (1) du véhicule.

3. Poutre de remorquage selon la revendication 2, caractérisée en ce que chaque moyen de liaison (7) est constitué d'un doigt mobile (41) coopérant avec une ouverture (42) pratiquée à travers le palier (62) associé.

4. Poutre de remorquage selon la revendication 3, caractérisée en ce que chaque doigt (41) est guidé en translation par deux canaux de réception (24) au travers de chacun desquels coulisse ledit doigt (41) pour permettre son accrochage sur la caisse du véhicule.

5. Poutre de remorquage selon l'une quelconque des revendications 1 à 4, caractérisée en ce que les deux blocs flexibles (20, 21) comportent chacun une vis (22) vissée dans la porte (3).

6. Poutre de remorquage selon la revendication 5, caractérisée en ce que le matériau élastique est logé entre une coquille interne (30) en appui sur la porte (3) et une coquille externe (33) en appui sur la tête (27) de la vis (22).

7. Poutre de remorquage selon la revendication 6, caractérisée en ce que la coquille interne (30) présente un profil externe tronconique dont la grande base est appliquée sur la porte (3) et la coquille externe (33) un profil interne tronconique dont la petite base est appliquée sur la tête (27) de la vis.

8. Poutre de remorquage selon la revendication 7, caractérisée en ce que la coquille externe (33) est munie au niveau de sa grande base d'un flasque (23) en appui sur une lèvre (35) de matériau élastique (34).

9. Poutre de remorquage selon l'une quelconque des revendications 3 à 8, caractérisée en ce que les deux doigts (41) des moyens de liaison sont reliés entre eux par un mécanisme de tringlerie (46a, 46b, 47, 48, 49, 55) pour les commander simultanément en translation.

10. Poutre de remorquage selon l'une quelconque des revendications précédentes, caractérisée en ce que chaque moyen de raccordement (7) est réalisé sous la forme d'un bloc usiné comprenant une partie massive (11a) supportant le doigt associé (41) et les blocs flexibles (20, 21) et une partie terminale (11b) prolongeant la partie massive et coopérant avec le palier associé (64).

## Claims

1. Towing beam (4) for a trailer intended to be applied to the drop-down door (3) of a vehicle (1), and fitted with a hook (5), the beam being constituted by a U-shaped part (6) having at each of its ends means (7) to connect it to the body of the vehicle (1), characterised in that each of the connecting means (7) is also linked to the drop-down door (3) and is composed of means (2à, 21) to attach it to the beam (4) and means (41) to link it to the vehicle body, the attachment means being constituted by two flexible block pressing on compressible shock-absorbing means (34), said shock-absorbing means being constituted by a flexible material pressing on the door and on the attachment means.

2. Towing beam according to Claim 1, characterised in that each connecting means (7) and incorporates an end part (11b) having a generally U-shaped profile applied on its inner side on a bearing (62) having a substantially identical outer profile and integral with the vehicle (1) body.

3. Towing beam according to Claim 2, characterised in that each connecting means (7) is formed of a mobile finger (41), co-operating with an opening (42) made through the associated bearing (62).

4. Towing beam according to Claim 3, characterised in that each finger (41) is guided in translation by two slots (24) through which said finger (41) slides to allow it to hook onto the chassis.

5. Towing beam according to any one of Claims 1 to 4, characterised in that the two flexible blocks (20, 21) each incorporate a screw (22) screwed into the door (3).

6. Towing beam according to Claim 5, characterised in that the flexible material is housed between an inner shell (30) pressing on the door (3) and an outer shell (33) pressing on the head (27) of the screw (22).

7. Towing beam according to Claim 6, characterised in that the inner shell (30) has a tapered external profile whose wider end is pressed onto the door (3) and the outer shell (33) has a tapered inner profile whose narrower end is pressed onto the screw head.

8. Towing beam according to Claim 7, characterised in that the outer shell (33) is fitted at its wider end with a flange (23) pressing on a lip (35) of flexible material (34).

9. Towing beam according to any one of Claims 3 to 8, characterised in that the two fingers (41) of the connecting means are connected together by a rod assembly mechanism (46a, 46b, 47, 48, 49, 55) that controls them simultaneously in translation.

10. Towing beam according to any one of the above Claims, characterised in that each connecting means (7) is made in the form of a machined block comprising a solid part (11a) supporting the associated finger (41) and the flexible blocks (20, 21), and an end part (11b) extending the solid part and co-operating with the associated bearing (64).

## Patentansprüche

1. Abschleppbalken (4) zum Anbringen an einer herunterklappbaren Tür (3) eines Fahrzeugs (1), versehen mit einem Haken (5), wobei der Balken aus einem Profil (6) in U-Form besteht, der an jedem seiner Enden ein Anschlußmittel (7) am Aufbau des Fahrzeugs (1) besitzt, gekennzeichnet dadurch, daß jedes Anschlußmittel (7) ebenfalls mit der herunterklappbaren Tür (3) verbunden ist und aus einem Befestigungsmittel (20, 21) am Balken (4) und einem Verbindungsmittel (41) mit dem Fahrzeugaufbau besteht, wobei das Befestigungsmittel aus zwei flexiblen Blöcken besteht, die auf ein zusammendrückbares Dämpfmittel (43) aufliegen, wobei das besagte Dämpfmittel aus einem elastischen Werkstoff besteht, der auf der Tür und auf dem Befestigungsmittel aufliegt.

2. Abschleppbalken gemäß dem Anspruch 1, gekennzeichnet dadurch, daß jedes Anschlußmittel (7) einen Endteil (11b) mit einem im allgemeinen U-förmigen Profil umfaßt, welcher Endteil auf der Innenseite auf ein Lager (62) aufliegt, das ein in etwa gleiches äußeres Profil hat und fest mit dem Chassis (1) des Fahrzeugs verbunden ist.

3. Abschleppbalken gemäß dem Anspruch 2, gekennzeichnet dadurch, daß jedes Verbindungsmittel (7) aus einem beweglichen Finger (41) besteht, der mit einer Öffnung (42) zusammenwirkt, die durch das dazugehörende Lager (62) angeordnet wird.

4. Abschleppbalken gemäß dem Anspruch 3, gekennzeichnet dadurch, daß jeder Finger (41) in Verschiebung von zwei Aufnahmekanälen (24) geführt wird, durch welche jeder Finger (41) gleitet, um sein Anhängen am Fahrzeugaufbau zu ermöglichen.

5. Abschleppbalken gemäß einem beliebigen der Ansprüche 1 bis 4, gekennzeichnet dadurch, daß die beiden flexiblen Blöcke (20, 21) jeweils eine Schraube (22) umfassen, die in die Tür (3) geschraubt wird.

6. Abschleppbalken gemäß dem Anspruch 5, gekennzeichnet dadurch, daß der elastische Werkstoff zwischen einer inneren Schale (30), die auf der Tür (3) aufliegt, und einer äußeren Schale (33), die auf dem Kopf (27) der Schraube (22) aufliegt, untergebracht ist.

7. Abschleppbalken gemäß dem Anspruch 6, gekennzeichnet dadurch, daß die innere Schale (30) ein kegelstumpfförmiges äußeres Profil aufweist, dessen große Basis auf der Tür (3) aufliegt, und dadurch, daß die äußere Schale (33) ein kegelstumpfförmiges Profil aufweist, dessen kleine Basis auf dem Kopf (27) der Schraube aufliegt.

8. Abschleppbalken gemäß dem Anspruch 7, gekennzeichnet dadurch, daß die äußere Schale (33) auf der Ebene ihrer großen Basis mit einem Flansch (23) versehen ist, der auf einer Lippe (35) aus elastischem Werkstoff (34) aufliegt.

9. Abschleppbalken gemäß einem beliebigen der Ansprüche 3 bis 8, gekennzeichnet dadurch, daß die beiden Finger (41) der Verbindungsmittel untereinander durch einen Gestängemechanismus (46a, 46b, 47, 48, 49, 55) verbunden sind, um sie gleichzeitig in Verschiebung zu steuern.

10. Abschleppbalken gemäß einem beliebigen der oben genannten Ansprüche, gekennzeichnet dadurch, daß jedes Anschlußmittel (7) die Form eines bearbeiteten Blocks mit einem massiven Teil (11a) hat, der den dazugehörenden Finger (41) trägt sowie die flexiblen Blöcke (20, 21) und einen Endteil (11b), der den massiven Teil verlängert und mit dem dazugehörenden Lager (64) zusammenwirkt.
